# EUROPÄISCHE PATENTANMELDUNG

(11) **EP 0 555 771 A2**
(43) Veröffentlichungstag der Anmeldung: **18.08.1993**
(21) Anmeldenummer: 93101728.9
(22) Anmeldetag: 04.02.1993
(51) Int. Cl.: G06K 7/10

(54) **Fenster für eine Einrichtung zur optischen Warenkodeabtastung**

(30) Priorität: 12.02.1992 DE 4204112
(71) Anmelder: SIEMENS AKTIENGESELLSCHAFT, D-80333 München (DE)
(72) Erfinder: Kuhnert, Reinhold, Dr., W-8000 München 19 (DE)

(57) **Zusammenfassung**

Die Erfindung betrifft ein Fenster für eine Einrichtung zur optischen Warenkodeabtastung, zum Beispiel eine Laser-Scanner-Kasse, bei der das Fenster (F) aus einem transparenten Substrat (S), beispielsweise aus gewöhnlichem Fensterglas, besteht auf das, zur Erhöhung der Kratzfestigkeit, eine dünne Schicht (C) aus polykristallinem oder aus amorphem, wasserstoffhaltigem Kohlenstoff (a-C:H) aufgebracht ist. Der Vorteil der Erfindung liegt insbesondere darin, daß das erfindungsgemäße Fenster billiger herstellbar ist als ein Fenster aus kratzfestem Spezialglas.

## Beschreibung

Die Erfindung betrifft ein Fenster für eine Einrichtung zur optischen Warenkodeabtastung nach den gleichlautenden Oberbegriffen der Patentansprüche 1 und 3.

Ein Fenster der gattungsgemäßen Art wird üblicherweise aus kratzfestem Spezialglas hergestellt, damit nicht darübergleitende Waren die Fensteroberfläche beschädigen und eine fehlerfreie optische Abtastung des Warenkodes beeinträchtigen. Kratzfeste Spezialgläser, wie zum Beispiel Saphirglas, besitzen zwar eine relativ hohe Kratzfestigkeit, sind aber relativ teuer.

Der Erfindung liegt die Aufgabe zugrunde, ein Fenster für eine Einrichtung zur optischen Warenkodeabtastung anzugeben, das mindestens die Kratzfestigkeit der sonst üblichen Spezialgläser aufweist aber insgesamt billiger zu fertigen ist.

Die Aufgabe wird erfindungsgemäß durch die in den kennzeichnenden Teilen der Patentansprüche 1 und 3 angegebenen Merkmale gelöst.

Der mit der Erfindung erzielbare Vorteil liegt insbesondere darin, daß als Substrat für das Fenster auch relativ leicht bearbeitbare transparente Kunststoffe Verwendung finden können.

Die Ansprüche 2, und 4 bis 6 sind auf besondere Ausbildungen des erfindungsgemäßen Fensters gerichtet.

Die Erfindung wird anhand der Zeichnungen näher erläutert.

Hierzu ist ein Ausschnitt eines erfindungsgemäßen Fensters F zusammen mit einem Ausschnitt einer darüberliegenden Ware W und einer unterhalb des Fensters F liegenden Lichtquelle L und einer ebenfalls unterhalb des Fensters F liegenden Detektiereinrichtung D gezeigt. Die Ware W besitzt dabei auf der dem Fenster zugewandten Seite einen optischen Kode K, der beispielsweise in Form eines üblichen Balkenkodes ausgeführt ist. Von der unterhalb des Fensters F liegenden Lichtquelle L, die beispielsweise aus einer Laserröhre besteht, wird ein Abtaststrahl 1 durch das Fenster F hindurch auf den Kode K gerichtet, wodurch ein durch den optischen Kode in seiner Intensität beeinflußter Reflexionsstrahl 2 durch das Fenster F zur Detektiereinrichtung D richtbar ist. Das Fenster F selbst besteht dabei erfindungsgemäß aus einem transparenten Substrat S auf das mindestens warenseitig eine dünne Schicht C aufgebracht ist, die ebenfalls lichtdurchlässig ist aber eine wesentlich höhere Oberflächenhärte als das Substrat S besitzt. Die Dicke des Substrats S liegt beispielsweise bei 1 bis 5 mm und die dünne Schicht C weist eine Dicke von kleiner/gleich 1 µm auf.

Erfindungsgemäß besteht die dünne Schicht C aus amorphem, wasserstoffhaltigem Kohlenstoff (a-C:H), der im wesentlichen sogenannte sp³-Bindungen des Kohlenstoffs aufweist und damit ähnliche Härtegrade wie Diamant besitzt. Ein Verfahren zur Herstellung solcher dünnen Schichten aus amorphem, wasserstoffhaltigem Kohlenstoff ist an sich, beispielsweise aus der europäischen Anmeldeschrift EP-A-0 381 110 (Siemens AG) im Zusammenhang mit Schutzschichten für elektroaktive Passivierungsschichten von Halbleitern bekannt. Als Substrat S kann bei diesem Verfahren sowohl Glas, zum Beispiel gewöhnliches Fensterglas, als auch Kunststoff, zum Beispiel Acrylglas, verwendet werden, da die Temperatur beim Herstellverfahren relativ niedrig ist und beispielsweise im Zimmertemperaturbereich aber in jedem Fall wesentlich unterhalb des Schmelzpunktes eines Kunststoffsubstrats liegt. Die Herstellung des erfindinngsgemäßen Fensters erfolgt hierbei in der Weise, daß auf das oben erwähnte Substrat S durch eine Hochfrequenz-Niederdruck-Plasmaabscheidung gasförmiger Kohlenwasserstoffe die dünne Schicht aus amorphem, wasserstoffhaltigem Kohlenstoff aufgebracht wird.

Sei einer weiteren Ausbildung des erfindungsgemäßen Fensters wird eine dünne Schicht C aus polykristallinem Kohlenstoff unter Vermeidung einer Zwischenschicht unmittelbar auf ein aus Glas, beispielsweise gewöhnliches Fensterglas, bestehendes Substrat S aufgebracht. Die dünne Schicht C aus polykristallinem Kohlenstoff sollte aus optischen Gründen eine möglichst glatte Oberfläche besitzen, dies wird durch Polieren oder durch Aufwachsen von Kristallen, deren Kristallgitterebenen parallel zur Substratoberfläche verlaufen erreicht. Die Herstellung der dünnen polykristallinen Kohlenstoffschicht C erfolgt, wie beispielsweise in der Publikation "Applications of Diamond Films and Related Materials", Elsevier Science Publishers B. V., 1991, Seite 197 bis 205 beschrieben, durch CVD (chemical vapor deposition) mit einem Prozeßgasgemisch aus Methan und Wasserstoff und einer Substrattemperatur die im Bereich von 600 bis 900°C liegt.

Aus der europäischen Anmeldeschrift EP-A-0 372 696 ist ein Verfahren zur Herstellung einer polykristallinen Kohlenstoffschicht auf einem Glassubstrat für sich bekannt, bei dem mit Hilfe von CVD die polykristalline Kohlenstoffschicht aus Gemischen von Kohlenstoff-Fluor- und Kohlenstoff-Wasserstoff-Verbindungen bildbar ist. Da jedoch bei diesem Verfahren das Glassubstrat angeätzt würde, wird vor dem Abscheiden der polykristallinen Kohlenstoffschicht eine Nitridschicht aufgebracht. Ferner ist aus der zuletzt genannten Anmeldeschrift ein Gegenstand, insbesondere ein Fahrzeugfenster, bekannt, der zwischen der polykristallinen Kohlenstoffschicht und dem Glassubstrat eine Schutzschicht aufweist und dessen polykristalline Kohlenstoffschicht Fluor enthält um eine hydrophile Oberfläche zu bilden.

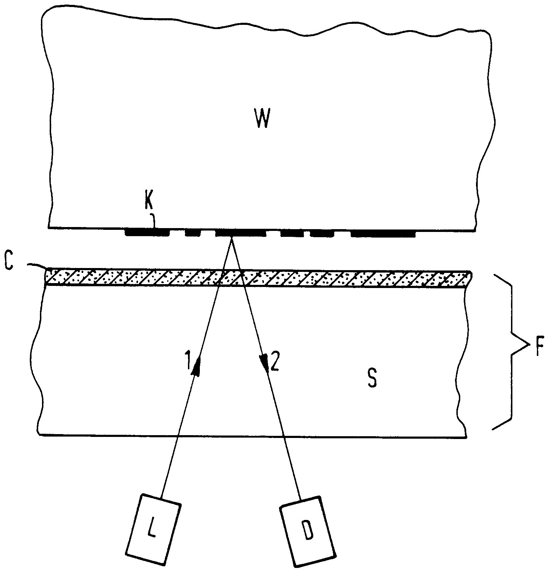

## Patentansprüche

1. Fenster für eine Einrichtung zur optischen Warenkodeabtastung, bei der mit einem optischen Kode (K) versehene Waren (W) über dem Fenster (F) bewegbar sind und bei der von einer Lichtquelle (L) ein Abtaststrahl (1) durch das Fenster hindurch auf den optischen Kode (K) und infolgedessen ein vom optischen Kode (K) ausgehender Reflexionsstrahl (2) durch das Fenster auf eine Detektoreinrichtung (D) richtbar ist, **dadurch gekennzeichnet,** daß das Fenster aus einem transparenten Substrat (S) besteht auf das, zur Erhöhung der Kratzfestigkeit, eine dünne Schicht (C) aus polykristallinem Kohlenstoff unter Vermeidung einer Zwischenschicht unmittelbar aufgebracht ist.

2. Fenster nach Anspruch 1, **dadurch gekennzeichnet,** daß das transparente Substrat aus gewöhnlichem Fensterglas besteht.

3. Fenster für eine Einrichtung zur optischen Warenkodeabtastung, bei der mit einem optischen Kode (K) versehene Waren (W) über dem Fenster (F) bewegbar sind und bei der von einer Lichtquelle (L) ein Abtaststrahl (1) durch das Fenster hindurch auf den optischen Kode (K) und infolgedessen ein vom optischen Kode (K) ausgehender Reflexionsstrahl (2) durch das Fenster auf eine Detektoreinrichtung (D) richtbar ist, **dadurch gekennzeichnet,** daß das Fenster aus einem transparenten Substrat besteht auf das, zur Erhöhung der Kratzfestigkeit, eine dünne Schicht (C) aus amorphem, wasserstoffhaltigem Kohlenstoff (a-C:H) aufgebracht ist.

4. Fenster nach Anspruch 3, **dadurch gekennzeichnet,** daß das transparente Substrat aus gewöhnlichem Fensterglas besteht.

5. Fenster nach Anspruch 3, **dadurch gekennzeichnet,** daß das transparente Substrat aus Kunststoff besteht.

6. Fenster nach Anspruch 5, **dadurch gekennzeichnet,** daß das Substrat aus Acrylglas besteht.
